# EUROPÄISCHE PATENTSCHRIFT

(11) **EP 2 591 707 B1**
(45) Veröffentlichungstag und Bekanntmachung des Hinweises auf die Patenterteilung: **07.01.2015**
(21) Anmeldenummer: 12401220.4
(22) Anmeldetag: 05.11.2012
(51) Int. Cl.: A47J 31/60

(54) **Vorrichtung zur Zubereitung und Ausgabe von Getränken**
Device for preparing and dispensing beverages
Dispositif de préparation et de distribution de boissons

(30) Priorität: 11.11.2011 DE 102011055264
(43) Veröffentlichungstag der Anmeldung: 15.05.2013
(73) Patentinhaber: Miele & Cie. KG, 33332 Gütersloh (DE)
(72) Erfinder: Last, Mario, 33739 Bielefeld (DE); Nattkemper, Jörg, 59069 Hamm (DE); Tembaak, Jutta, 49492 Westerkappeln (DE)

(56) Entgegenhaltungen:
- EP-A1- 1 656 863
- EP-A1- 2 265 158
- EP-A1- 2 363 051

## Beschreibung

Die Erfindung betrifft eine Vorrichtung zur Zubereitung von Getränken mit einer Steuereinrichtung, einem Wasserbehälter und einem Leitungssystem, einer Einrichtung zur Erzeugung von Heißwasser und/oder Dampf, einem Getränkeherstellungsmodul, einer ersten Pumpe im Leitungsabschnitt zu der Einrichtung zur Erzeugung von Heißwasser und/oder Dampf, sowie einem System zur Aufbereitung von Wasser.

Die Erfindung betrifft außerdem ein Verfahren zur Durchführung eines Entkalkungs- und/oder Reinigungsprogramms in einer solchen Vorrichtung.

In der EP 1 656 863 A1 wird eine ähnliche Vorrichtung beschrieben.

Aus der EP 2 265 158 B1 ist eine Getränkezubereitungsvorrichtung bekannt, bei der Wasser aus einem Wasserbehälter mittels einer Pumpe über eine Heizeinrichtung zu einem Getränkeherstellungsmodul zu einer Getränkeausgabe gefördert wird. Derartige Vorrichtungen müssen je nach Wasserhärte von Zeit zu Zeit entkalkt werden. Dazu wird das Leitungssystem inklusive der Heizeinheit und der Pumpe mit einer kalkaggressiven Flüssigkeit beaufschlagt, welche die Kalkablagerungen während einer Einwirkzeit löst. Die gelösten Ablagerungen werden in einem Spülschritt aus dem Leitungssystem sowie den Komponenten heraus gespült. Bei bekannten Getränkezubereitungsvorrichtungen werden der Entkalkungsvorgang sowie der anschließende Spülvorgang manuell vom Benutzer eingeleitet und überwacht. Ähnliche Verfahrensschritte sind zur Durchführung eines Reinigungsvorganges für das Getränkeherstellungsmodul, z.B. für eine Brüheinheit, erforderlich. In einem Reinigungsprogramm für das Getränkeherstellungsmodul wird das Reinigungsmittel in der Regel direkt in die Brüheinheit gegeben.

Um einen Entkalkungsvorgang sowie den erforderlichen Spülschritt für den Benutzer zu optimieren kann bei der aus der EP 2 265 158 B1 bekannten Getränkezubereitungsvorrichtung ein System zur Aufbereitung von Wasser in den Strömungsweg abwärts des Wasserbehälters integriert werden. Das System zur Aufbereitung des Wassers ist als Durchlaufentkalkungssystem ausgebildet, welches eine Kammer aufweist, die zur Aufnahme einer Dosis eines wasserlöslichen Entkalkungsmittels ausgebildet ist. Die Kammer des Durchlaufentkalkungssystems ist über einen Wassereinlass und einen Wasserauslass in das Leitungssystem integriert. Vor der Durchführung eines Entkalkungsprogramms wird vom Benutzer eine Dosis Entkalkungsmittel in die Kammer eingebracht und der Wasserbehälter mit einer vorbestimmten Menge Wasser gefüllt. Der eigentliche Entkalkungsprozess mit anschließendem Spülschritt wird von der Steuereinheit automatisch gesteuert. Dazu ist die Wassermenge, die in den Behälter einzufüllen war, derart festgelegt, dass eine erste Wassermenge zur Auflösung des Entkalkungsmittels im Durchfluss für den Entkalkungsprozess und eine zweite Wassermenge für den anschließenden Spülschritt bemessen ist. Die Durchführung eines Entkalkungsprozesses muss bei der bekannten Getränkezubereitungsvorrichtung vom Benutzer manuell durch Füllen des Wasserbehälters mit einer festgelegten Wassermenge und Zugabe des Entkalkungsmittels in die Kammer vorbereitet werden.

Eine Aufgabe der Erfindung besteht entsprechend darin, eine Getränkezubereitungsvorrichtung weiter zu optimieren, so dass ein Entkalkungsprozess oder ein Reinigungsprozess vollautomatisch durchführbar ist.

Erfindungsgemäß wird dieses Problem durch eine Getränkezubereitungsvorrichtung mit den Merkmalen des Patentanspruchs 1 sowie Verfahren zur Durchführung eines Entkalkungs- und/oder Reinigungsprogramms in einer solchen Vorrichtung mit den Merkmalen der Ansprüche 6 bzw. 11 gelöst. Vorteilhafte Ausgestaltungen und Weiterbildungen der Erfindung ergeben sich aus den jeweils nachfolgenden Unteransprüchen.

Die mit der Erfindung erreichbaren Vorteile bestehen insbesondere darin, dass das Leitungssystem neben den Leitungsabschnitten, die zum Getränkeherstellungsmodul führen, weitere Leitungsabschnitte umfasst, in die ein System zur Aufbereitung von Wasser aus dem Wasserbehälter integriert ist und die über entsprechende Ventilanordnungen eine Zirkulation von aufbereitetem Wasser nach einem in der Steuereinheit hinterlegtem oder von der Steuereinheit variierbaren Zirkulationsprofil ermöglichen. Die Zirkulation erfolgt dabei mittels einer in den weiteren Leitungsabschnitten angeordneten Pumpe P2, die gegenüber der für den Getränkezubereitungsbetrieb ausgelegten Pumpe P1 für einen geringeren Druckaufbau ausgelegt ist. Dies ist zur Zirkulation einer Entkalkerlösung ausreichend. Entkalkungsprozesse, die über Nacht vollautomatisch ablaufen können, dadurch besonders geräuscharm durchgeführt werden.

Ein Ausführungsbeispiel der Erfindung ist in den Zeichnungen rein schematisch dargestellt und wird nachfolgend näher beschrieben. Es zeigt
- Figur 1: eine schematische Darstellung der Komponenten der Getränkezubereitungsvorrichtung,
- Figur 2a, 2b: die Darstellung eines Programmablaufplans für ein Verfahren zur Durchführung eines Entkalkungs- und/oder Reinigungsprogramms in der Getränkezubereitungsvorrichtung

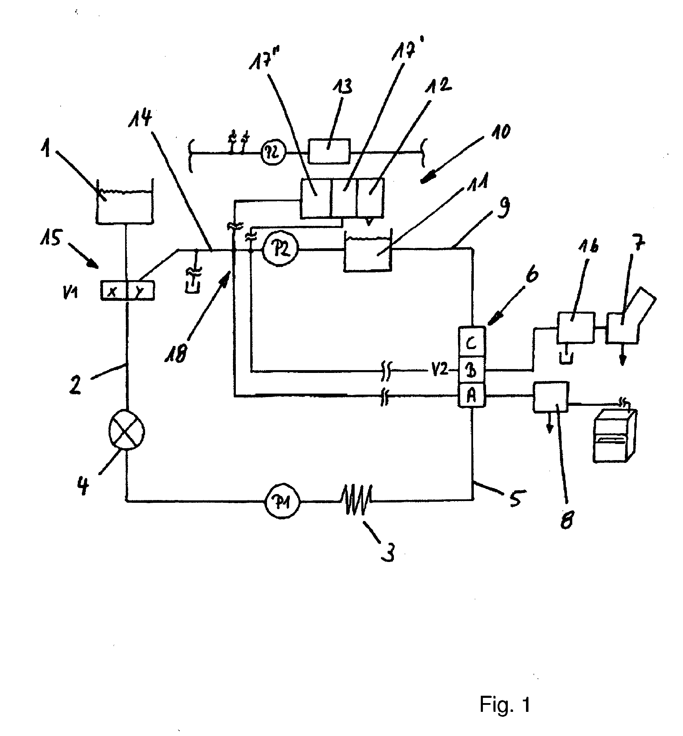

In der Figur 1 sind die wesentlichen Komponenten zur Zubereitung von Getränken wie Kaffee, Espresso oder Getränken mit heißer Milch und/oder Milchschaum wie beispielsweise Latte Macchiato oder Cappuccino gezeigt. Die Steuereinrichtung ist dabei nicht näher dargestellt.

Die Getränkezubereitungsvorrichtung weist einen Wasserbehälter 1 zur Aufnahme eines Wasservorrats für die Zubereitung von Getränken sowie für die Durchführung eines Entkalkungs- und/oder Reinigungsprogramms auf. Im Leitungssystem ist in einem Leitungsabschnitt 2 zu der Einrichtung 3 zur Erzeugung von Heißwasser und/oder Dampf, vorzugsweise ein Thermoblock, ein Durchflussmesser 4 sowie eine erste Pumpe P1 angeordnet. Die Einrichtung 3 zur Erzeugung von Heißwasser und/oder Dampf ist über einen Leitungsabschnitt 5 mit einer steuerbaren Ventilanordnung 6 (V2) verbunden über die je nach Ventilstellung in Abschnitt A, B oder C Heißwasser und/oder Dampf zur Ausgabe über das Getränkeherstellungsmodul 7 bzw. die Brüheinheit oder über den Heißwasser/Dampfauslass 8 geführt wird. Im Getränkezubereitungsbetrieb ist insbesondere der Abschnitt C der Ventilanordnung 6 (V2) geschlossen, so dass keine Fluidverbindung zu dem strömungstechnisch hinter der Ventilanordnung 6 (V2) liegenden Leitungsabschnitt 9 des Leitungssystems besteht. Über die Abschnitte B und A wird im Getränkezubereitungsbetrieb ebenfalls keine Fluidverbindung hergestellt.

Zur Durchführung eines Entkalkungs- und/oder Reinigungsprogramms umfasst das Leitungssystem einen weiteren Leitungsabschnitt 9 in den ein System 10 zur Aufbereitung von Wasser aus dem Wasserbehälter 1 integriert ist.

Das System 10 umfasst in einem ersten Ausführungsbeispiel einen Mischbehälter 11, eine dem Mischbehälter zugeordnete Dosiereinrichtung 12 für wasserlösliche Mittel zur Aufbereitung des Wassers für einen Entkalkungs- und/oder Reinigungsvorgang. Im Leitungssystem ist vorzugsweise strömungstechnisch hinter dem Mischbehälter 11 eine weitere Pumpe P2 angeordnet.

In einem zweiten Ausführungsbeispiel umfasst das System 10 anstatt eines Mischbehälters 9 eine austauschbare Kartusche 13 aus der im Durchfluss Entkalkungsmittel für einen Entkalkungsvorgang erzeugt wird. Bei diesem Ausführungsbeispiel ist die Pumpe P2 stromabwärts der Kartusche 13 angeordnet.

Das System 10 zur Aufbereitung von Wasser aus dem Wasserbehälter 1 steht während eines Entkalkungsvorganges über einen Leitungsabschnitt 14 in fluidleitender Verbindung mit einer steuerbaren Ventilanordnung 15 (V1) im Leitungsabschnitt 2.

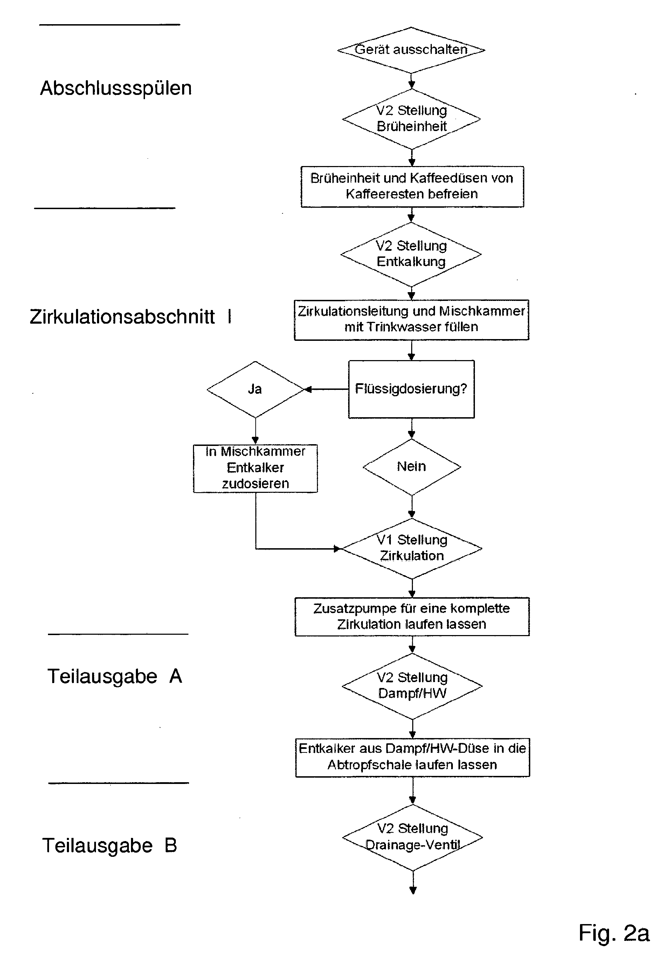

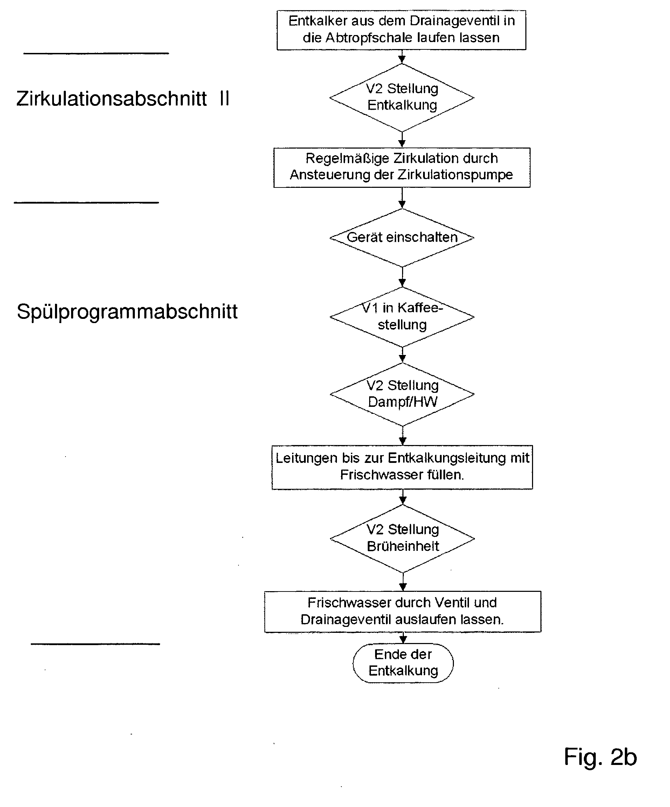

Im Folgenden wird ein Verfahren zur Durchführung eines Entkalkungsvorganges anhand des in Figur 2 dargestellten Programmablaufplans für eine Getränkezubereitungsvorrichtung mit Mischkammer 11 beschrieben.

Ein Entkalkungsvorgang wird bei der erfindungsgemäßen Getränkezubereitungsvorrichtung vorzugsweise in einer Betriebspause des Gerätes z.B. über Nacht automatisch von der Steuereinheit eingeleitet. Dazu können vom Benutzer feste Zeiträume, in denen der Entkalkungsvorgang durchgeführt werden kann im Speicher hinterlegt werden. Es ist auch möglich, den Entkalkungsvorgang nach Ablauf einer vorgebbaren Stillstandszeit des Gerätes automatisch zu starten. Weiterhin bietet das Gerät dem Benutzer die Möglichkeit einen Entkalkungsvorgang manuell einzuleiten.

Bei bereits bekannten Getränkezubereitungsvorrichtungen findet mit jedem Ausschalten des Gerätes ein Abschlussspülen statt, bei dem Wasser aus dem Wasserbehälter 1 durch das Leitungssystem bis zur Getränkeausgabe des Getränkeherstellungsmodul 7 gefördert wird.

Für einen Entkalkungsvorgang wird zeitlich danach die Ventilanordnung 6 (V2) von der Steuereinheit in eine erste Entkalkungsstellung überführt, in der die Abschnitte A und B während eines ersten Programmabschnitts des Entkalkungsvorganges den Strömungsweg zum Getränkeherstellungsmodul 7 sowie zum Heißwasser/Dampfauslass 8 sperren. Über den Abschnitt C ist der Strömungsweg in den Leitungsabschnitt 9 zum System 10 zur Aufbereitung von Wasser freigegeben. Über die Pumpe P2 wird Wasser zeit- oder volumengesteuert aus dem Wasserbehälter 1 bis in den Leitungsabschnitt 14 gefördert. Dabei wird P1 nur so lange von der Steuereinheit angesteuert, bis der Mischbehälter 11 bis zu einem definierten Füllstand gefüllt ist. Dem Mischbehälter 11 kann eine nicht näher beschriebene Füllstandsüberwachungseinrichtung zugeordnet sein. Das Füllvolumen des Wasserbehälters 1 ist derart bemessen, dass das Leitungssystem insgesamt mit Wasser befüllbar und darüber hinaus auch eine oder mehrere Teilausgaben von Entkalkerlösung in weiteren Programmschritten des Entkalkungsvorganges sowie ein oder mehrere Spülschritte des Leitungssystems für einen vollautomatischen Ablauf des Entkalkungsprozesses ermöglicht werden.

Nach dem Befüllen des Leitungssystems und dem Erreichen des definierten Füllstandes im Mischbehälter 11 erfolgt die Zugabe des Entkalkungsmittels. Das Entkalkungsmittel wird dem Mischbehälter 11 aus der Dosiereinrichtung 12 zugeführt. Vorzugsweise kommt ein flüssiges Entkalkungsmittel zum Einsatz, das in geringer Konzentration tröpfchenweise zudosiert wird. Pulverförmige oder tablettenförmige Entkalkungsmittel können ebenfalls zum Einsatz kommen. Nach Ablauf einer definierten Zeit, die derart bemessen ist, dass das Entkalkungsmittel in der Flüssigkeitsmenge im Mischbehälters 11 gelöst ist, werden die Abschnitte X Y der Ventileinrichtung 15 (V1) von der Steuereinheit in eine Zirkulationsstellung überführt, in der die Entkalkerlösung aus dem Mischbehälter 11 über die Abschnitte 2, 5, 9, 14 des Leitungssystems zirkuliert und dabei die im Leitungssystem liegenden Komponenten flutet. In der Zirkulationsphase wird vorzugsweise die Pumpe P2 von der Steuereinheit angesteuert. Die Pumpe P2 ist gegenüber P1 für einen geringeren Druckaufbau, der zur Zirkulation der Entkalkerlösung ausreichend ist, ausgelegt. Im Programmablaufplan ist das Auflösen des Entkalkungsmittels sowie die daran anschließende Zirkulation der Entkalkerlösung als Zirkulationsabschnitt I bezeichnet. In dem Zirkulationsabschnitt I kann die Pumpe P2 dauerhaft oder in Intervallen von der Steuereinheit angesteuert werden. Das Zirkulationsprofil kann von der Steuereinheit in Abhängigkeit der Wasserhärte variiert werden.

Im Anschluss an den Zirkulationsabschnitt I erfolgen ein oder mehrere Programmabschnitte, in denen die Steuereinheit die Abschnitte C, B und A derart ansteuert, dass eine Teilausgabe von Entkalkerlösung über den Heißwasser/Dampfauslass 8 (Teilausgabe A) und/oder das dem Getränkeherstellungsmodul 7 bzw. der Brüheinheit vorgeschaltete Drainageventil 16 (Teilausgabe B) erfolgt. In diesen Programmabschnitten wird nur die Pumpe P2 von der Steuereinheit angesteuert. Der Mindestfüllstand des Mischbehälters 11 ist derart festgelegt, dass das Leitungssystem trotz Teilausgaben mit Entkalkerlösung gefüllt ist.

Nach Ablauf dieser Programmabschnitte wird die Ventilanordnung 6 (V2) von der Steuereinheit wieder in die erste Entkalkungsstellung überführt, in der die Abschnitte A und B während eines ersten Programmabschnitts des Entkalkungsvorganges den Strömungsweg zum Getränkeherstellungsmodul 7 sowie zum Heißwasser/Dampfauslass 8 sperren. Die Abschnitte X Y der Ventileinrichtung 15 (V1) verbleiben in der Zirkulationsstellung.

In dem weiteren Programmabschnitt (Zirkulationsabschnitt II) wird die Pumpe P2 von der Steuereinheit nach einem hier nicht näher beschriebenen Zirkulationsprofil angesteuert. In diesem Zirkulationsprofil sind Stillstandsphasen der Pumpe P2 zur Einwirkung der Entkalkerlösung sowie Betriebsphasen der Pumpe P2 für eine Zirkulation der Entkalkerlösung hinterlegt. Das Zirkulationsprofil kann von der Steuereinheit in Abhängigkeit der Wasserhärte variiert werden.

Die einzelnen Programmschritte im Zirkulationsabschnitt II (gemeint sind Stillstandsphasen und Betriebsphasen der Pumpe P2) können in dem gesamten zur Verfügung stehenden bis zur Wiederaufnahme des Getränkezubereitungsbetriebs durchgeführt werden. Es ist jedoch auch möglich, den gesamten Entkalkungsprozess zeitlich zu begrenzen und im Anschluss daran einen vollautomatischen Reinigungsvorgang programmgesteuert durchführen zu lassen.

Wird das Gerät vom Benutzer in den Getränkezubereitungsbetrieb überführt, erfolgt ein programmgesteuerter Spülschritt, für den die fluidleitende Verbindung der Leitungsabschnitte 9 und 14 zu den Leitungsabschnitten 2 und 5 mittels der Ventilanordnungen V1 und V2 gesperrt wird. Aus dem Wasserbehälter 1 wird mittels der Pumpe P2 Wasser für einen Spülschritt zur Ausgabe über das Getränkeherstellungsmodul 7 und/oder über den Heißwasser/Dampfauslass 8 gefördert. Die Wassermenge ist derart bemessen, dass die Entkalkerlösung vor der Zubereitung eines Getränkes in einem Spülprogrammabschnitt aus den Leitungsabschnitten 2 bis 5 entfernt wird. Die im den Leitungsabschnitten 9 bis 14 verbleibende Entkalkerlösung kann für einen nachfolgenden Entkalkungsvorgang genutzt werden.

Grundsätzlich ist es auch möglich, Zirkulationsprofile unter Ansteuerung der Pumpe P1 in der Steuereinheit zu hinterlegen.

Wird nach Abschluss eines automatisch durchgeführten Entkalkungsvorgang ein Reinigungsvorgang programmgesteuert durchgeführt oder manuell eingeleitet, wird von der Steuereinheit ein Spülschritt für das komplette Leitungssystem durchgeführt, damit Reste der Entkalkerlösung auch aus dem Mischbehälter 11 entfernt werden.

Für einen Reinigungsvorgang wird in ähnlicher Weise wie bei einem Entkalkungsvorgang Reinigungsmittel aus einer Dosiereinrichtung 17' dosiert. Das Reinigungsmittel wird vorzugsweise direkt in den Leitungsabschnitt 14 eingebracht. Der Leitungsabschnitt 14 ist strömungstechnisch hinter der Pumpe P2 mit entsprechenden Abzweigungen 18 verbunden, die eine fluidleitende Verbindung für die Reinigungsflüssigkeit unter Umgehung der Pumpe P1 und der Heizeinheit zum Getränkeherstellungsmodul 7 und zum Heißwasser/Dampfauslass 8 herstellen. Die Dosiereinrichtung 17' enthält geeignete entfettende Reinigungsmittel für die Reinigung der Brüheinheit. Die Dosiereinheit 17 enthält Reinigungsmittel zur Entfernung von Verschmutzungen, die bei der Zubereitung von Milchschaum und heißer Milch entstehen.

Nach einem Reinigungsvorgang mit Reinigungsflüssigkeit werden die Leitungsabschnitte des Leitungssystems sowie die Komponenten (8 und 7) abschließend programmgesteuert abschnittsweise oder komplett mit Wasser aus dem Wasserbehälter durchspült.

## Patentansprüche

1. Vorrichtung zur Zubereitung von Getränken mit einer Steuereinrichtung, einem Wasserbehälter (1) und einem Leitungssystem (2, 5), einer Einrichtung (3) zur Erzeugung von Heißwasser und/oder Dampf, einem Getränkeherstellungsmodul (7), einer ersten Pumpe (P1) im Leitungsabschnitt (2, 5) zu der Einrichtung (3) zur Erzeugung von Heißwasser und/oder Dampf, sowie einem System (10) zur Aufbereitung von Wasser,
**dadurch gekennzeichnet,**
**dass** das Leitungssystem (2, 5) eine Ventilanordnung (6) zum Getränkeherstellungsmodul (7) umfasst und einen der Ventilanordnung (6) nachgeschalteten weiteren Leitungsabschnitt (9, 14) umfasst, der über eine weitere Ventilanordnung (15) fluidleitend mit den zum Getränkeherstellungsmodul (7) führenden Leitungsabschnitten (2, 5) verbindbar ausgebildet ist, wobei das System (10) zur Aufbereitung von Wasser aus dem Wasserbehälter (1) in dem weiteren Leitungsabschnitt (9, 14) integriert angeordnet ist und dass in dem weiteren Leitungsabschnitt (9, 14) eine Pumpe (P2) angeordnet ist.

2. Vorrichtung zur Zubereitung von Getränken nach Anspruch 1,
**dadurch gekennzeichnet,**
**dass** das System (10) zur Aufbereitung von Wasser einen Mischbehälter (11) umfasst, dem ein Entkalkungsmittel aus einer dem Mischbehälter (11) zugeordneten Dosiereinrichtung (12) zuführbar ist.

3. Vorrichtung zur Zubereitung von Getränken nach Anspruch 1,
**dadurch gekennzeichnet,**
**dass** das System (10) zur Aufbereitung von Wasser eine austauschbare Kartusche (13) umfasst, aus der im Durchfluss Entkalkungsmittel für einen Entkalkungsvorgang erzeugt wird.

4. Vorrichtung zur Zubereitung von Getränken nach Anspruch 1,
**dadurch gekennzeichnet,**
**dass** die Pumpe (P2) strömungstechnisch hinter einer im Leitungsabschnitt (9, 14) angeordneten Kartusche (13) angeordnet ist.

5. Vorrichtung zur Zubereitung von Getränken nach Anspruch 1,
**dadurch gekennzeichnet,**
**dass** die Pumpe (P2) strömungstechnisch hinter einem im Leitungsabschnitt (9, 14) angeordneten Mischbehälter (11) angeordnet ist.

6. Verfahren zur Durchführung eines Entkalkungsprogramms in einer Vorrichtung zur Zubereitung von Getränken mit einer Steuereinrichtung gemäß Anspruch 1,
**gekennzeichnet durch**
die Aufbereitung einer Entkalkerlösung in einem System (10) zur Aufbereitung von Wasser, die programmgesteuerte Zirkulation der Entkalkerlösung nach einem Zirkulationsprofil das Spülen des Leitungssystems.

7. Verfahren zur Durchführung eines Entkalkungsprogramms nach Anspruch 6,
**dadurch gekennzeichnet,**
**dass** in dem Zirkulationsprofil Stillstandsphasen der Pumpe (P2) zur Einwirkung der Entkalkerlösung sowie Betriebsphasen der Pumpe (P2) für eine Zirkulation der Entkalkerlösung hinterlegt sind.

8. Verfahren zur Durchführung eines Entkalkungsprogramms nach Anspruch 7,
**dadurch gekennzeichnet,**
**dass** das Zirkulationsprofil von der Steuereinheit in Abhängigkeit der Wasserhärte variiert werden kann.

9. Verfahren zur Durchführung eines Entkalkungsprogramms nach Anspruch 6, **dadurch gekennzeichnet,**
**dass** der Entkalkungsvorgang bei der erfindungsgemäßen Getränkezubereitungsvorrichtung in einer Betriebspause des Gerätes, beispielsweise über Nacht, oder in einem Speicher hinterlegten Zeiträumen automatisch von der Steuereinheit eingeleitet wird.

10. Verfahren zur Durchführung eines Entkalkungsprogramms nach Anspruch 6, **dadurch gekennzeichnet,**
**dass** der Entkalkungsvorgang vom Benutzer manuell einzuleiten ist.

11. Verfahren zur Durchführung eines Reinigungsprogramms in einer Vorrichtung zur Zubereitung von Getränken mit einer Steuereinrichtung gemäß Anspruch 1,
**gekennzeichnet durch**
die Aufbereitung einer Reinigungslösung in einem System (10) zur Aufbereitung von Wasser,
die programmgesteuerte Zufuhr der Reinigungsflüssigkeit zu den Komponenten,
das Spülen des Leitungssystems.

## Claims

1. Device for the preparation of beverages comprising a control means, a water container (1) and a line system (2, 5), a means (3) for generating hot water and/or steam, a beverage preparation module (7), a first pump (P1) in the line portion (2, 5) leading to the means (3) for generating hot water and/or steam, and a system (10) for treating water,
**characterised in that**
the line system (2, 5) comprises a valve arrangement (6) for the beverage preparation module (7) and comprises a further line portion (9, 14) downstream of the valve arrangement (6), which portion can be connected by means of a further valve arrangement (15) so as to conduct fluid using the line portions (2, 5) leading to the beverage preparation module (7), the system (10) for treating water from the water container (1) being arranged in the further line portion (9, 14) in an integrated manner and **in that** a pump (P2) is arranged in the further line portion (9, 14).

2. Device for the preparation of beverages according to claim 1,
**characterised in that**
the system (10) for treating water comprises a mixing container (11) to which a descaling agent from a dosing means (12) associated with the mixing container (11) can be fed.

3. Device for the preparation of beverages according to claim 1,
**characterised in that**
the system (10) for treating water comprises a replaceable cartridge (13) from which a descaling agent is produced in the flow for a descaling process.

4. Device for the preparation of beverages according to claim 1,
**characterised in that**,
in terms of flow, the pump (P2) is arranged downstream of a cartridge (13) arranged in the line portion (9, 14).

5. Device for the preparation of beverages according to claim 1,
**characterised in that**,
in terms of flow, the pump (P2) is arranged downstream of a mixing container (11) arranged in the line portion (9, 14).

6. Method for carrying out a descaling program in a device for the preparation of beverages comprising a control means according to claim 1, **characterised by** the steps of preparing a descaling solution in a system (10) for treating water, circulating the descaling solution in a program-controlled manner according to a circulation profile, and rinsing the line system.

7. Method for carrying out a descaling program according to claim 6,
**characterised in that**
stationary phases of the pump (P2) for allowing the descaling solution to act, and operating phases of the pump (P2) for allowing the descaling solution to circulate, are provided in the circulation profile.

8. Method for carrying out a descaling program according to claim 7, **characterised in that**
the control unit can vary the circulation profile depending on the water hardness.

9. Method for carrying out a descaling program according to claim 6, **characterised in that**
the descaling process is initiated automatically by the control unit when the beverage preparation device according to the invention is not in use, for example overnight, or during periods of time stored in a memory.

10. Method for carrying out a descaling program according to claim 6, **characterised in that**
the descaling process is intended to be manually initiated by the user.

11. Method for carrying out a cleaning program in a device for preparing beverages comprising a control means according to claim 1, **characterised by** the steps of preparing a cleaning solution in a system (10) for treating water,
feeding the cleaning fluid in a program-controlled manner to the components, and rinsing the line system.

## Revendications

1. Dispositif pour la préparation de boissons, avec un dispositif de commande, un réservoir d'eau (1) et un système de conduites (2, 5), un dispositif (3) pour la production d'eau chaude et/ou de vapeur, un module de réalisation de boissons (7), une première pompe (P1) dans le tronçon de conduites (2, 5) conduisant vers le dispositif (3) pour la production d'eau chaude et/ou de vapeur, ainsi qu'avec un système (10) de traitement de l'eau,
**caractérisé en ce que**
le système de conduites (2, 5) comprend un agencement de vanne (6) conduisant au module de réalisation de boissons (7) et un autre tronçon de conduites (9, 14) qui est monté en aval de l'agencement de vanne (6) et qui est constitué de façon à pouvoir être raccordé de façon fluidique, par le biais d'un autre agencement de vanne (15), aux tronçons de conduites (2, 5) conduisant au module de réalisation de boissons (7), le système (10) de traitement de l'eau à partir du réservoir d'eau (1) étant disposé de façon intégrée dans l'autre tronçon de conduites (9, 14), et **en ce qu'**une pompe (P2) est disposée dans l'autre tronçon de conduites (9, 14).

2. Dispositif pour la préparation de boissons selon la revendication 1,
**caractérisé en ce que**
le système (10) de traitement de l'eau comprend un réservoir de mélange (11) auquel peut être conduit un agent détartrant à partir d'un dispositif de dosage (12) affecté au réservoir de mélange (11).

3. Dispositif pour la préparation de boissons selon la revendication 1,
**caractérisé en ce que**
le système (10) de traitement de l'eau comprend une cartouche (13) remplaçable à partir de laquelle est produit dans le flux un agent de détartrage pour un processus de détartrage.

4. Dispositif pour la préparation de boissons selon la revendication 1,
**caractérisé en ce que**
la pompe (P2) est, au plan de l'écoulement, disposée en aval d'une cartouche (13) disposée dans le tronçon de conduites (9, 14).

5. Dispositif pour la préparation de boissons selon la revendication 1,
**caractérisé en ce que**
la pompe (P2) est, au plan de l'écoulement, disposée en aval d'un réservoir de mélange (11) disposé dans le tronçon de conduites (9, 14).

6. Procédé de réalisation d'un programme de détartrage dans un dispositif de préparation de boissons avec un dispositif de commande selon la revendication 1,
**caractérisé par**
le traitement d'une solution de détartrage dans un système (10) de traitement de l'eau,
la circulation, commandée par programme, de la solution de détartrage selon un profil de circulation,
le lavage du système de conduites.

7. Procédé de réalisation d'un programme de détartrage selon la revendication 6,
**caractérisé en ce que**,
dans le profil de circulation, des phases d'arrêt de la pompe (P2) pour l'entrée en action de la solution de détartrage ainsi que des phases de fonctionnement de la pompe (P2) pour une circulation de la solution de détartrage sont enregistrées.

8. Procédé de réalisation d'un programme de détartrage selon la revendication 7,
**caractérisé en ce que**
le profil de circulation peut être modifié par l'unité de commande en fonction de la dureté de l'eau.

9. Procédé de réalisation d'un programme de détartrage selon la revendication 6,
**caractérisé en ce que**
le processus de détartrage, dans le dispositif de préparation de boissons selon l'invention, est lancé automatiquement par l'unité de commande pendant une pause de fonctionnement de l'appareil, par exemple pendant la nuit, ou bien pendant des périodes enregistrées dans une mémoire.

10. Procédé de réalisation d'un programme de détartrage selon la revendication 6,
**caractérisé en ce que**
le processus de détartrage doit être lancé manuellement par l'utilisateur.

11. Procédé de réalisation d'un programme de nettoyage dans un dispositif de préparation de boissons avec un dispositif de commande selon la revendication 1,
**caractérisé par**
le traitement d'une solution de nettoyage dans un système (10) de traitement de l'eau,
l'amenée, commandée par programme, du liquide de nettoyage vers les composants,
le lavage du système de conduites.
